Europäisches Patentamt

**European Patent Office**

**Office européen des brevets**

(19)

(11) Publication number: **0 123 521**
**A1**

(12)

# EUROPEAN PATENT APPLICATION

(21) Application number: **84302669.1**

(22) Date of filing: **19.04.84**

(51) Int. Cl.³: **B 43 K 7/02**
**B 43 K 15/00**

(30) Priority: **20.04.83 US 486816**

(43) Date of publication of application:
**31.10.84 Bulletin 84/44**

(84) Designated Contracting States:
**AT BE CH DE FR GB IT LI LU NL SE**

(71) Applicant: **SCRIPTO INC.**
**P.O. Box 47800**
**Doraville Georgia 30362(US)**

(72) Inventor: **Parvin, Behrooz Alizadeh**
**9541 Westwood Drive**
**Westminister California 92683(US)**

(72) Inventor: **Peter, Walter J.**
**642 Norumbega Drive**
**Monrovia California 91016(US)**

(74) Representative: **Sheader, Brian N. et al,**
**ERIC POTTER & CLARKSON 5 Market Way Broad Street**
**Reading Berkshire, RG1 2BN(GB)**

(54) **Direct filling pressurized writing instrument and method of manufacturing.**

(57) A shell formed of plastic material of a type which is highly impermeable to solvents found in certain ink compositions forms the body of a pen. A follower and wiping element is placed in the bore of the shell through its rear end opening and a charge of ink is introduced into the shell through its forward ball point assembly receiving opening. A ball point assembly is then snap fitted into this opening. The bore of the shell rearwardly of the follower is pressurized substantially above atmospheric pressure and then closed under such pressure by the insertion in the rear end portion of the bore of a closure plug which is secured and sealed by spin welding.

EP 0 123 521 A1

FIG 2

## Background of the Inventions

Traditionally, pressurized ball point pens employing inks possessing a viscosity in the range of 10,000 cps to 3,000,000 cps are constructed by placing and confining the ink in a pressurized metal tube, and then assembling the pressurized ink-filled tube in a plastic barrel or shell which forms the body of the pen during use. The metal tube forms an effective barrier to the escape of ink solvents, thereby preventing drying of the ink. The necessary pressure is maintained in the metal tube by a ball point serving as a closure for the forward end of the tube and by a metal plug at the rear end of the tube. The use of the metal tube for confining the ink has been deemed necessary because the ink solvents are known to attack most plastics.

Additionally, the coefficients of expansion among the metal tube, metal ball point and closure plug are such that the necessary pressure is maintained in the tube and the ink solvents are prevented from escaping when the ambient temperature fluctuates.

It has long been realized that significant savings in the manufacturing cost of writing instruments of the above type could be realized if the metal tube could be eliminated entirely and the pressurized ink could be placed directly in the bore of the pen barrel or shell formed of plastics material, and if the solvents in the ink could be effectively prevented from escaping.

Recently, improved plastics have come into being which render it feasible to eliminate the aforementioned pressurized metal tube and enable the pressurized ink to be loaded directly into the bore of the shell formed of plastics, and retained therein by a front ball point assembly and a sealed rear end closure plug. This pen is particularly adaptable to erasable inks of the type disclosed in U.S. Patents 4,329,262 and 4,349,639 that utilize highly volatile solvents. The teachings and formulations of these two patents are incorporated by reference herein. Plastics having the ability to retain these inks and their solvents include certain nylons, polypropylenes, acrilonitriles and polyethylene teraphtalate.

The elimination of the traditional pressurized metal tube has further been made possible in the invention by employing a unique snap fitted ball point assembly locked in the front end of the pen barrel and a cooperating spin welded rear closure plug formed of the same impermeable plastics used to make the pen barrel or shell.

Other features and advantages of the invention will become apparent to those skilled in the art during the course of the following description.

## Brief Description of the Drawings

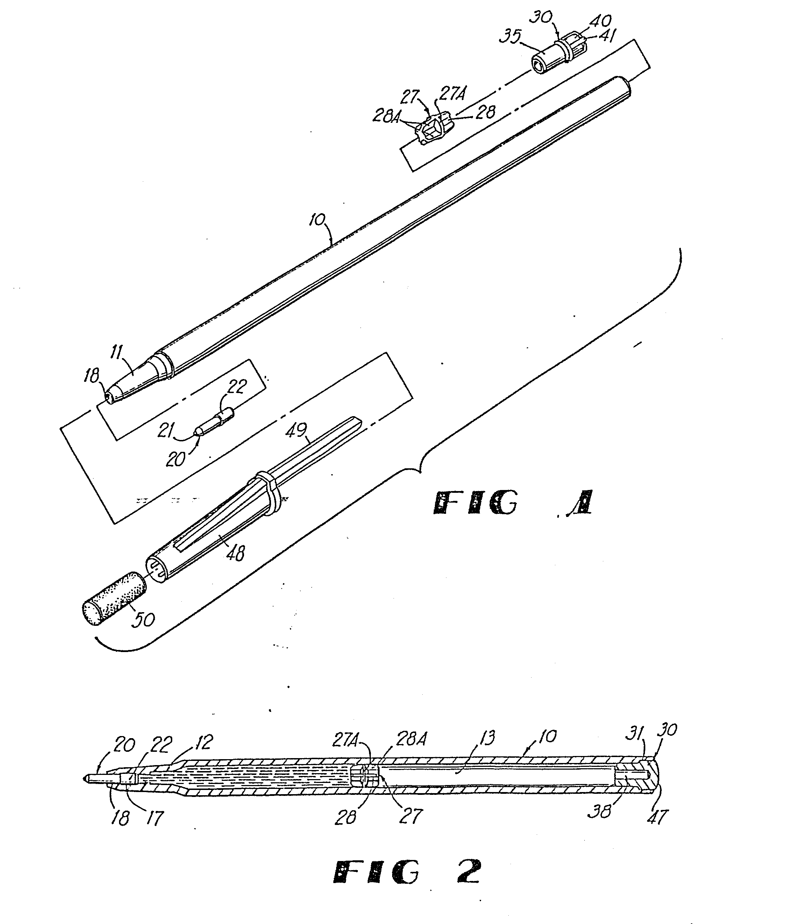

Figure 1 is an exploded perspective view of an ink writing instrument according to the invention.

Figure 2 is a central longitudinal vertical section through the assembled writing instrument.

Figure 3 is a fragmentary vertical section through the forward end portion of the writing instrument showing a snap fitted ball point assembly in place.

Figure 4 is a similar fragmentary view showing an ink follower.

Figure 5 is a similar view taken through the rear end portion of the writing instrument showing a rear closure plug in place.

Figure 6 is an exploded fragmentary side elevation, partly in section, showing the rear closure plug with relation to the rear of the writing instrument barrel or shell prior to placement of the closure plug in the barrel.

Figure 7 is a rear end elevation of the barrel.

Figure 8 is a front end elevation of the closure plug.

Figure 9 is a rear end elevation of the closure plug.

Figure 10 is a flow chart showing the steps of manufacturing the writing instrument.

Detailed Description

Referring to the drawings in detail wherein like numerals designate like parts, the numeral 10 designates a barrel or shell forming the body portion of a pressurized ink ball point pen in accordance with the present invention. The barrel 10 is preferably injection molded from a plastics material which is impermeable to inks particularly of the type described in U.S. Patent 4,329,262 when such ink is pressurized in the barrel 10 in a pressure range of 5 to 150 psi. Suitable materials for the barrel 10 include nylon, mica-filled nylon, polypropylene, glass-filled polypropylene, acrilonitriles and polyethylene teraphthalate. Such materials possess sufficiently high impermeability to retain the pressurized ink and ink solvents.

It is a recognized fact that all plastic materials are permeable to gases, but to a variable degree. The general formula shown below relates the quantity of gas defusing through the barrel wall per unit time:

$$F = \frac{PA}{E} (P_1 - P_2)$$

WHERE:

F = Quantity of gas defusing through wall in unit time F

P = Permeability constant (See Table I below)

A = Area

$P_1$ = Pressure inside pen

$P_2$ = Ambient pressure

E = Thickness of barrel wall

Permeability constant P for various applicable polymers are shown in Table I below. Nylon 6,6 is the preferred molding material because of its low permeability constant, its resistance to ink solvents and generally ease of molding properties.

TABLE I  Permeability constants for various polymers (Values for $P \times 10^{10}$ cm$^3$ sec$^{-1}$ mm cm$^{-2}$ cm Hg$^{-1}$)

6            0123521

| POLYMER | PERMEABILITY $N_2$ (30°C) |
|---|---|
| Nylon 6,6 | 0.10 |
| PVC | 0.40 |
| Cellulose Acetate | 2.80 |
| Polystyrene | 2.90 |
| Polypropylene | 2.90 |
| Natural Rubber | 80.8 |

The barrel 10 has a tapered leading end portion 11 including a restricted bore section 12 of lesser diameter than the main cylindrical bore 13 of the barrel 10. A further restricted bore section 14 ahead of bore section 12 leads to a somewhat enlarged bore section 15 which flares forwardly at 16 to an enlarged cylindrical bore section 17, in turn leading into a somewhat reduced diameter cylindrical bore 18 opening through the front end face of the barrel. Between the flared bore section 16 and annular radial shoulder 19 at the juncture of bore sections 17 and 18, a cavity is formed near the front of the pen barrel which allows secure snap fitting of a ball point assembly 20 into the barrel. This assembly includes a properly textured ball 21 to facilitate writing with the ink and a rear cylindrical portion 22 having a tapered end 23. Ahead of portion 22, the ball point assembly or unit further includes an elongated reduced diameter cylinder portion 24 terminating in a tapered forward end 25 containing the ball socket 26.

The assembly 20 is snap fitted in the forward end of the pen barrel 10 and remains securely locked therein during the use of the pen to effectively seal the pressurized ink and prevent its leakage from the forward end of the barrel. The rear tapered portion 23 of the ball point assembly can be forced through the forward bore 18, followed by entry through this bore of the enlarged cylinder portion 22 of the assembly 20. The portion 22, after passing through the bore 18, snappingly engages behind the annular shoulder 19 with the rear tapered portion 23 firmly seated against the correspondingly tapered face 16 of the barrel. In this way, an adequate seal to retain the ink under pressure is established. The plastics material from which the pen barrel 10 is formed can yield sufficiently to enable the described tight snap fitting of the ball point unit 20 in the forward end of the barrel. The body of the ball point assembly or unit is normally made of metal.

The pen further includes a follower element 27 having a central disc portion 27A with coaxial extensions 28 extending from each side of disc 27A.

Spaced about said extensions and disc portion are a plurality of equally spaced forwardly and rearwardly sloping fins 28A. The follower is symmetrical both about its longitudinal and horizontal axis so as to avoid any specific orientation during insertion. The follower element is preferably formed of talc-filled polypropylene. It is lightweight and adapted to adhere to the ink charge 29 in the bore of the barrel 10 between the ball point unit 20 and follower 27. The mass of the follower 27 is such that it will not sink into the ink 29 during use. Its outside diameter is such that the follower will act as a wiper on the inside diameter of bore 13 to remove excess ink as the follower gradually moves forwardly in the barrel following the ink mass as the latter is gradually diminished.

The bore 13 of barrel 10 behind the follower 27 is pressurized during manufacturing of the pen to a pressure of 5 to 150 psi above atmospheric pressure. The exact positive pressure employed will depend on the viscosity of the ink selected and the texture of the ball element 21. The positive pressure must be maintained in the pen barrel throughout its life and to accomplish this result a rear closure plug 30 preferably formed of the same material used to make

0123521

the barrel 10 is employed. This rear closure plus is preferably secured and permanently sealed in the rear of the pen barrel by spin welding. Although spin welding is the preferred method of sealing since it provides the added feature of allowing the closure plug to act as a blow out safety valve, other methods of sealing have been found satisfactory, such as solvent bonding, sonic welding, etc.

The amount of pressure required to promote satisfactory ink flow through the point must be optimized. Too much pressure will cause excessive ink deposition, too little pressure causes skipping, and short write-outs or writing life. Consideration of an optimum operating window include factors such as ink viscosity point metering, and desired ink volume. The exponential, relationship between pressure and ink flow through capillaries agrees well with the Herschel-Bulkley equation shown below:

$$Q = KP^n$$

WHERE:

Q = Rate of flow

P = Applied pressure

K, and n are empirical figures that are independent of capillary dimensions, but relate to viscosity, temperature, and friction coefficient between ink and inner surface of containing body or barrel.

More particularly, at its rear end the barrel 10 has an enlarged bore section 31 having a slightly reduced diameter ring 32 near its longitudinal center. Three circumferentially equidistantly spaced ribs 33 separated by grooves 34 are formed internally in the barrel 10 at the juncture of the bore 13 with the enlarged bore section 31.

The rear end closure plug 30 has a forward extension 35 which is axially tapered forwardly approximately 1°. The tapered extension 35 has circumferentially equidistantly spaced flats 36 formed in its periphery 37 which is otherwise conically tapered. The closure plug 30 also has a center axial bore 38 to conserve material. The leading end extension 35 is beveled at 39.

A rear enlarged head 40 of closure plug 30 has circumferentially spaced ribs 41 to facilitate engagement with a spin welding tool, not shown. Forwardly of these ribs, a cylindrical portion 42 of the plug 30 has circumferentially equidistantly spaced flats 43 formed in the peripheral surface 44, the diamter of which is somewhat greater than the outside diameter of the ribs 41. The plug portion 42 is tapered at 45 for engagement with a similarly tapered seat 46 of ribs 33.

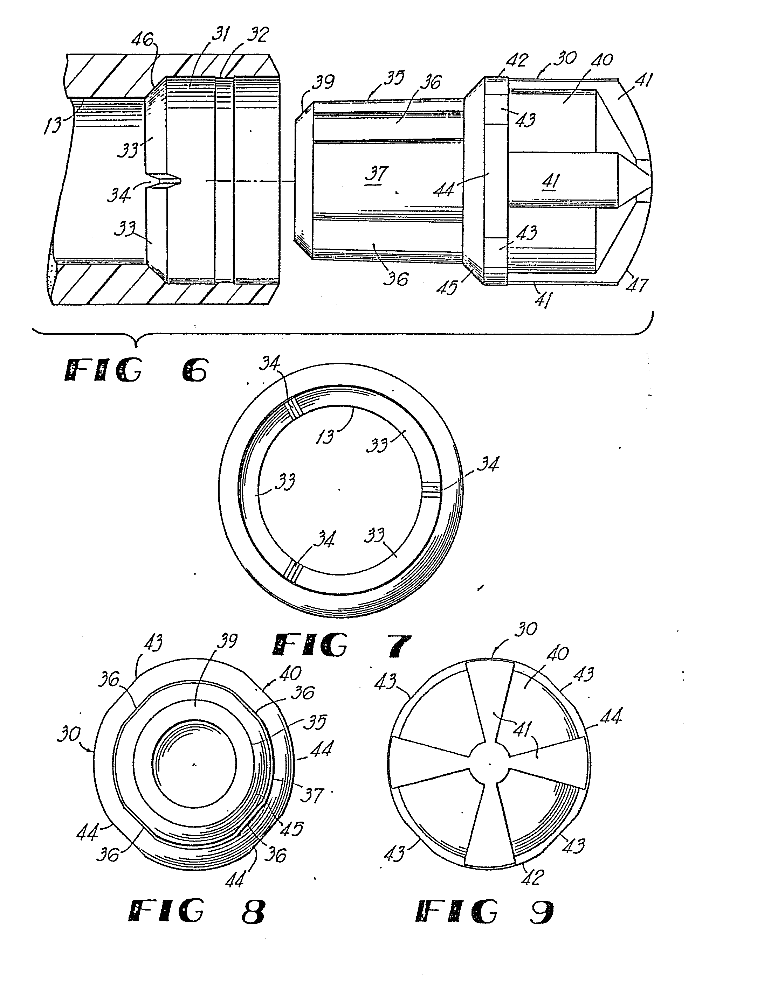

During the manufacturing process for the writing instrument and while the bore 13 is maintained under the previously-noted positive pressure not exceeding about 150 psi, the rear closure plug 30 is sealed in the rear end of the barrel 10 by spin welding. The assembled plug, Figure 5, is substantially flush with the rear end of the barrel 10 with only the rounded end face 47 of the plug projecting slightly.

The diameter of bore 13 is substantially equal to the diameter of plug extension 35 at its widest point adjacent to the beveled face 45. The diameter of enlarged head 40 exceeds by about .005 inch the internal diameter of ring 32. The plug 30 is pressed into place in the bore 13 and enlarged bore section 31 as shown in Figure 5, and its ribs 41 are engaged by a suitable spinning tool and the closure plug is spin welded into place permanently and sealed to permanently trap the pressurized atmosphere in the bore 13 of barrel 10 behind the follower disc element 27.

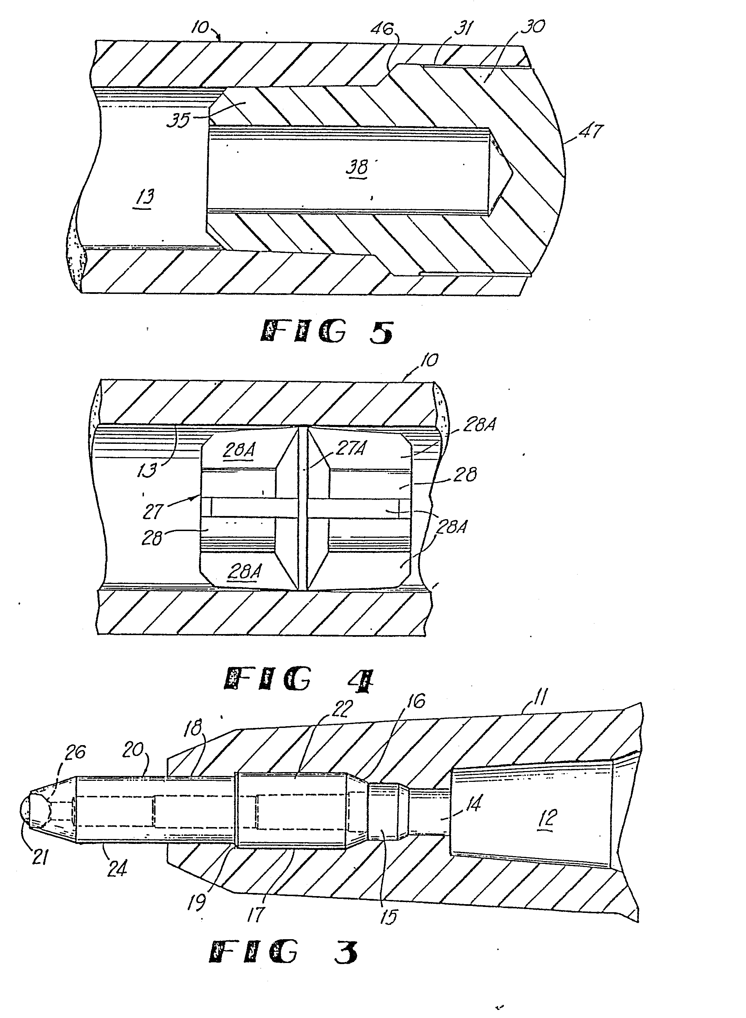

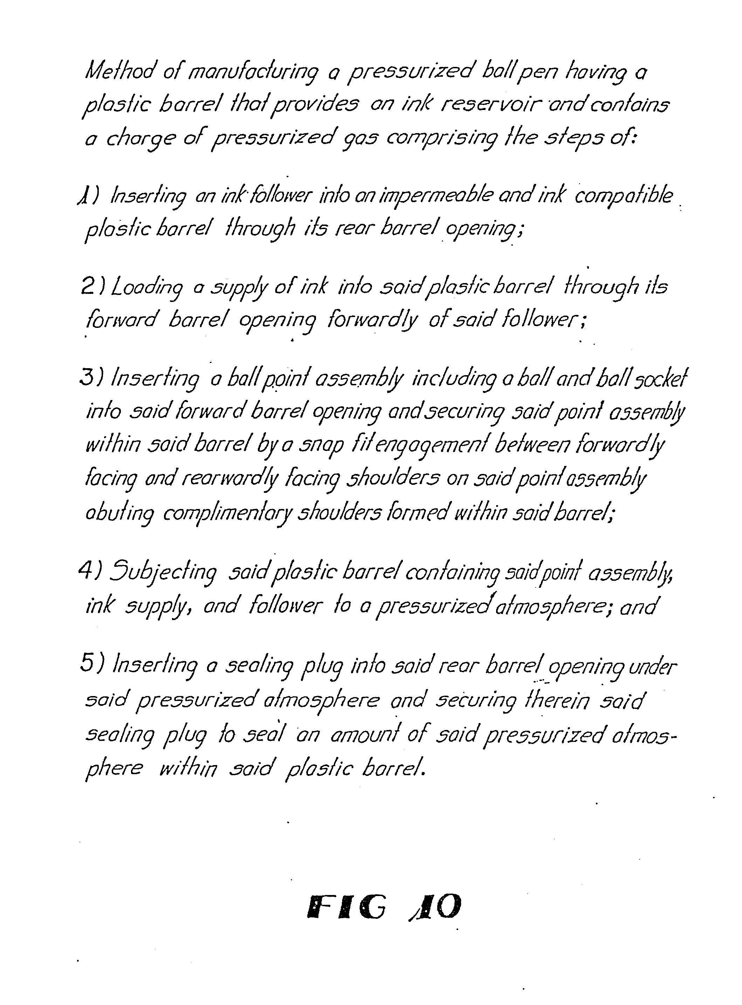

Referring to Figure 10, a flow chart of the manufacturing method, the ink follower disc element 27 is first placed in the bore 13 of barrel 10 through the rear open end of the barrel. Next, a supply of ink is loaded into the plastics barrel 10 through its forward end ahead of the follower element 27. Following this, the complete ball point assembly 20 is snapped into place and locked between the annular shoulder 19 and the opposing tapered shoulder 16, Figure 3. The assembled unit 20 effectively seals the ink charge in the pen barrel between the ball point assembly and follower element 27 which tends to adhere to the ink.

Next, the bore 13 rearwardly of follower disc element 27 receives a pressurized atmosphere through the rear end of the barrel to a pressure not exceeding about 150 psi. While this pressure is maintained in the bore 13, the closure plug 30 is inserted into the rear of the barrel and secured and sealed by spin welding, as described, to trap the pressurized atmosphere permanently in the plastics barrel 10.

The writing instrument preferably includes a cap 48 having an attached clip 49 adapted to fit over and protect the tapered forward portion 11 and ball point assembly 20, as when the pen is not being used or placed in a pocket of clothing. The cap 48 has an end cavity receiving a suitable eraser 50.

As stated previously the inks disclosed in U.S. Patent Nos. 4,329,262 and 4,349,639, the teaching and formulation of which are incorporated herein by reference, are particularly adaptable for use in this type pressurized ball pen. The following two formulations are also very suitable for use in the pen construction of the present invention.

EXAMPLE A - COLOR BLUE

| Components | Selected Type | % Amount By Weight |
|---|---|---|
| Elastomeric Polymer | Natsyn 2205 | 24.0 |
| Colorant | Pigment | 18.0 |
| Volatile Solvent | Lacquer Diluent #6 | 11.5 |
|  | VM&P Naptha | 11.5 |
| Non-volatile low viscosity solvent | 2257 Oil | 13.5 |
| Non-volatile substantially high viscosity solvent | Diisodecyl Phthalate | 14.5 |
| Lubricants | Mixture of Oleic, Lauric and Stearic Acids (1, 1 and 1) | 3.0 |
| Other | Resin | 4.0 |
|  |  | 100.0 |

EXAMPLE B - COLOR BLUE

| Components | Selected Type | % Amount By Weight |
|---|---|---|
| Elastomeric Polymer | 50/50-Natsyn 2205 and Cis-1, 4 Polyisoprene (SMR 5CV60) | 23.0 |

EXAMPLE B - COLOR BLUE

| Components | Selected Type | % Amount By Weight |
|---|---|---|
| Colorant | Pigment | 18.0 |
| Volatile Solvent | Lacquer Diluent #6 | 12.0 |
| | VM&P Naptha | 12.0 |
| Non-volatile low viscosity solvent | 2257 Oil | 13.5 |
| Non-volatile substantially high viscosity solvent | Diisodecyl Phthalate | 14.5 |
| Lubricants | Mixture of Oleic, Lauric and Stearic Acids (1, 1 and 1) | 3.0 |
| Other | Resin | 4.0 |
| | | 100.0 |

Details of the above components and their suppliers are set forth in U.S. Patent Nos. 4,329,262 and 4,349,639.

It is to be understood that the form of the invention herewith shown and described is to be taken as a preferred example of the same, and that various changes in the shape, size, material, arrangement and assembly method of parts may be resorted to, without departing from the spirit of the invention or scope of the subjoined claims.

Claims

1. A method of manufacturing a ball point pen comprising placing an ink follower in the bore of a barrel forming the body portion of the pen and formed of plastics material of a type which is substantially impermeable to ink under pressure, introducing a supply of ink into the bore of said barrel through a forward opening of the barrel so that the ink is disposed forwardly of the follower, placing a ball point assembly unit in said forward opening lockingly and sealingly to retain the ink in the bore of the barrel, pressurizing the bore of the barrel rearwardly of the follower to a positive pressure above atmospheric pressure, and inserting a closure plug lockingly and sealingly into the rear end of the barrel while maintaining the positive pressure in the bore of the barrel and thereby permanently trapping pressurized atmosphere in the bore of the barrel between the follower and closure plug.

2. The method as defined in Claim 1, and the ball point assembly unit being placed in said forward opening of the barrel by a snap fit engagement between spaced opposing shoulders within the forward opening.

3.  The method as defined in Claim 1, and said closure plug being inserted lockingly and sealingly by spin welding the closure plug to the barrel within a rear opening of the barrel.

4.  An ink writing instrument comprising a barrel forming the body portion of the writing instrument and having an ink receiving bore and front and rear openings communicating with said bore, said barrel being formed of plastics material which is substantially impermeable to pressurized ink, an ink follower within the bore adapted for gradual forward movement during use, a charge of ink within the bore of the barrel forwardly of said follower, a ball point assembly unit lockingly and sealingly engaged within the forward opening of the barrel ahead of the charge of ink with the ink charge substantially trapped between the follower and said unit, the bore of the barrel rearwardly of said follower being pressurized with gas substantially above ambient atmospheric pressure, and a rear closure plug for the barrel lockingly and sealingly engaged in the rear opening of the barrel and permanently retaining the pressurized gas in the barrel.

5.  An ink writing instrument as defined in Claim 4, and the rear closure plug being formed of the same material as the barrel and being locked and sealed to the barrel by spin welding.

6. An ink writing instrument as defined in Claim 5, and the rear opening of the barrel having a radially shallow circumferential ring therein and the external diameter of said closure plug being slightly larger than the internal diameter of said ring whereby spin welding of the plug and barrel can occur in the region of said ring.

7. An ink writing instrument as defined in Claim 4, and the ball point assembly unit being snap fitted in the forward opening of the pen barrel, said unit having an enlargement near its rear end engaging lockingly in a cavity of said forward opening between two locking shoulders at the ends of the cavity.

8. An ink writing instrument as defined in Claim 7, and said enlargement cavity being cylindrical, one of said shoulders being an annular radial shoulder and the other shoulder being an annular conically tapered shoulder, said enlargement having an interengaging annular tapered end portion.

9. An ink writing instrument as defined in Claim 6, and the rear closure · having portions of different diameters with the forward portion of the plug smaller in diameter than the rearward portion of the plug, and the bore of said barrel having a rear end portion of enlarged diameter receiving the rear end portion of the plug so that the assembled closure plug is substantially flush with the rear end of the barrel.

10. An ink writing instrument as defined in Claim 9, and the barrel having a solid seating surface for the rear portion of the closure plug within the barrel forwardly of the rear end of the barrel.

11. A method of manufacturing a writing instrument comprising placing a supply of ink and an ink follower element in the bore of a barrel forming the body portion of the instrument, placing a ball point assembly lockingly and sealingly in the forward end portion of the barrel to prevent the escape of ink through the forward end of the barrel, pressurizing the bore of the barrel behind the ink follower element to a pressure well above ambient atmospheric pressure, and maintaining the pressurized atmosphere in the bore of the barrel while closing and sealing the rear end of the bore of the barrel.

12. The method as defined in Claim 11, and the closing and sealing of the rear end of the bore of the barrel consisting of spin welding a plug in the rear end of such bore.

13.  An erasable ink writing instrument comprising a barrel forming the body portion of the writing instrument and having a bore, a supply of erasable ink and an ink follower and bore wiping element disposed in the bore in direct contact therewith, a ball point assembly engaged in the forward end of the barrel and serving as a seal to prevent escape of erasable ink from said bore through the forward end of the writing instrument, the bore of the barrel behind said ink follower and bore wiping element being pressurized with an atmosphere substantially above ambient atmospheric pressure, and means closing the rear end of the bore of the barrel and preventing the escape of the pressurized atmosphere in said bore from the rear end of the writing instrument.

14.  An erasable ink writing instrument as defined in Claim 13, and said barrel being formed of material which is impermeable to erasable ink under a pressure of about 150 psi.

15.  An erasable ink writing instrument as defined in Claim 13, and said means closing the rear end of the bore comprising a rear closure plug within the bore

1/4

FIG 1

FIG 2

FIG 5

FIG 4

FIG 3

FIG 6

FIG 7

FIG 8

FIG 9

Method of manufacturing a pressurized ball pen having a plastic barrel that provides an ink reservoir and contains a charge of pressurized gas comprising the steps of:

1) Inserting an ink follower into an impermeable and ink compatible plastic barrel through its rear barrel opening;

2) Loading a supply of ink into said plastic barrel through its forward barrel opening forwardly of said follower;

3) Inserting a ball point assembly including a ball and ball socket into said forward barrel opening and securing said point assembly within said barrel by a snap fit engagement between forwardly facing and rearwardly facing shoulders on said point assembly abuting complimentary shoulders formed within said barrel;

4) Subjecting said plastic barrel containing said point assembly, ink supply, and follower to a pressurized atmosphere; and

5) Inserting a sealing plug into said rear barrel opening under said pressurized atmosphere and securing therein said sealing plug to seal an amount of said pressurized atmosphere within said plastic barrel.

FIG 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 775 015 (TSUNODA et al.) <br><br> * Column 3, lines 12-19, 45-50; column 4, line 22 - column 5, line 7 * | 1,4,11 ,13-15 | B 43 K 7/02 <br> B 43 K 15/00 |
| Y | | 2,3,5- 10,12 | |
| Y | FR-E- 68 069 (BONVECCHIO) <br> * Column 2, lines 8-13 * | 2,7,8 | |
| Y | GB-A-1 233 378 (WARD) <br><br> * Page 2, lines 78-94; page 3, lines 6-41, 57-85 * | 3,5,6, 9,10, 12 | |
| A | EP-A-0 042 289 (GRAPHIC CONTROLS CORP.) <br> * Page 10, lines 13-16 * | 2,7,8 | TECHNICAL FIELDS SEARCHED (Int. Cl. 3) <br><br> B 43 K <br> C 09 D <br> B 29 D |
| A | FR-A-1 128 960 (BONVECCHIO) <br> * Page 2, column 1, line 54 - column 2, line 2 * | 2,7,8 | |
| D,A | US-A-4 329 262 (MULLER) <br> * Claim 1 * | 13-15 | |

The present search report has been drawn up for all claims

| Place of search | Date of completion of the search | Examiner |
|---|---|---|
| THE HAGUE | 26-07-1984 | VAN OORSCHOT J.W.M. |